# EUROPEAN PATENT APPLICATION

(11) **EP 1 378 493 A2**
(43) Date of publication of application: **07.01.2004**
(21) Application number: 03101668.6
(22) Date of filing: 10.06.2003
(51) Int. Cl.: C02F 9/14, C02F 9/02, C02F 3/34

(54) **Spa water circulation system comprising a water purification system**

(30) Priority: 17.06.2002 FI 20021173
(71) Applicant: Oy Clewer Ltd, 96900 Saarenkylä (FI); Suomen Allaslaite Oy, 40100 Jyväskylä (FI)
(72) Inventor: Orava, Pekka, 40250 Jyväskylä (FI); Uotila, Jussi, 96900 Saarenkylä (FI); Zaitsev, Gennadi, 96500 Rovaniemi (FI)
(74) Representative: Boije-Backman, Solveig Magdalena

(57) **Abstract**

The invention relates to a spa water circulation system and a method of circulating spa water. The water consumption at a spa as well as at a swimming hall consists of both pool water and grey water, which is mainly shower water. Both waters are purified. The present invention provides an economical solution for purifying both these waters by circulating the waters through two purification systems which comprises a first biological purification unit (5) and a filtration unit (3).

## Description

### FIELD OF THE INVENTION

The invention relates to water purification and particularly to a spa water circulation system and a method of circulating spa water.

### BACKGROUND OF THE INVENTION

The water of a public pool normally changes in three, four hours. However, since the volume of the pool may be very large, it naturally follows that the water consumption is also large. To reduce the water consumption, at least part of the pool water can be circulated back to the pool through a purification system. In that case, the water can be purified mechanically through a sand filter or a coal filter, for example. These filters clog sooner or later, and to prevent this, they have to be washed regularly, which also increases water consumption. Filters are usually washed by spraying large amounts of water with pressure through the filter against the current. A third factor that significantly increases the water consumption at swimming halls is shower water consumed in connection with swimming and sauna.

Conventionally, water can also be purified biologically. Water plants, for example, have been used in biological purification of pool water (FR 2784983 and CH 688235) as well as other microorganisms. Japanese application 6198291, for example, describes pool water purification by means of a filter which consists of active charcoal and to which certain bacteria, yeasts and fungi have been adsorbed. This way, the contaminants originating from humans can be removed effectively.

The above-mentioned publications only relate to the purification and circulation of the actual pool water but they do not mention anything about purification and circulation of other waters at a spa. Since the pool water forms only part of the total water consumption at a spa, a water circulation system which also takes into account the consumption of other water, such as shower water and preferably also filter wash water, would be welcome. The present invention provides such a total solution, i.e. a water circulation system which allows savings not only in pool water consumption but also in other water consumption as well as in water heating costs. An object of the invention is thus to achieve significant cost benefits in raw water charges and in heating of raw water. Another object is naturally to provide effective purification, in which case use of chemicals, such as chlorine, can be reduced, which makes pools more pleasant to swimmers.

### BRIEF DESCRIPTION OF THE INVENTION

The spa water circulation system of the present invention is characterized in that it comprises a first purification system, which is connected to a pool (1) and comprises a first biological purification unit (5) and a filtration unit (3), and a second purification system, to which grey waters of the spa are connected and which comprises a second biological purification unit (7) and a filtration unit (10), which is connected to the pool (1).

According to one embodiment of the invention, the water circulation system comprises a first purification system which is connected to a pool (1) and comprises a first biological purification unit (5) and a filtration unit (3), and a second purification system, to which grey waters of the spa are connected and which comprises a second biological purification unit (7) and a filtration unit (10), which is connected to the pool (1), and the pool water is further connected to the filtration units (3) and (10) against the current and further from the filtration units to the second biological purification unit (7).

The method of circulating spa water according to the invention is characterized in that pool (1) water is circulated through a first purification system, which comprises a first biological purification unit (5) and a filtration unit (3), and grey water is passed through a second purification system, which comprises a second biological purification unit (7) and a filtration unit (10), from which purified water is led to the pool.

According to one embodiment of the invention, pool (1) water is circulated through a first purification system, which comprises a first biological purification unit (5) and a filtration unit (3), and grey water is passed through a second purification system, which comprises a second biological purification unit (7) and a filtration unit (10), from which purified water is led to the pool, and the pool (1) water is circulated from the pool (1) against the current to filtration units (3 and 10) for use as wash water, and the used wash water is then led to the second biological purification unit (7).

Here the term "spa" generally refers to a swimming hall but it may also be another kind of facility where people do not necessarily swim. The term "swimming pool" thus also comprises pools intended for recreation only or for water gymnastics, for example.

Preferred embodiments of the invention are disclosed in the dependent claims.

The present invention enables effective purification of both the pool water and the grey water and their re-utilization in a smallish space. For several reasons, it would not be a good solution to combine all waters of swimming halls and take them to a common purification system. Often tens of thousands of cubic metres of pool water have to be circulated per day. The pool water is, however, rather clean, which enables the use of a relatively short residence time in purification. Instead, the grey water and optionally filter wash water, whose volumes are smaller, are dirtier and thus require longer residence times in purification. If all the above-mentioned waters were combined, it would be necessary to use long residence times for combined waters, in which case the purification system would take unreasonably much space. The effectiveness of a circulation and purification system for combined waters would not be good, either, since pool water contains different human excreta, for example nitrogen compounds, such as urea, whereas shower waters include large amounts of soap. The filter wash waters include a lot of organic waste, hair, skin pieces, etc. When different kinds of waters are supplied to different purification systems, it is also possible to utilize the fact that the mixed microbial population used for biological purification is adapted to remove exactly the contaminants the water concerned includes.

Separation of spa water purification processes into two parts further has the advantage that the process, if implemented as a simultaneous one, would be difficult to manage and operate and also be sensitive to changes in operation parameters.

The savings in heating costs naturally result from the fact that the water to be circulated has been heated once and remains warmer than usual cold water, which would otherwise have to be added to the system. Normally the filters, for example, are washed with cold water, in which case the whole filtration unit cools down and the clean water to be pumped back into the pool has to be reheated.

### BRIEF DESCRIPTION OF THE FIGURES

The invention will now be described in greater detail by means of preferred embodiments with reference to the accompanying figure, which illustrates a two-part spa water circulation system.

### DETAILED DESCRIPTION OF THE INVENTION

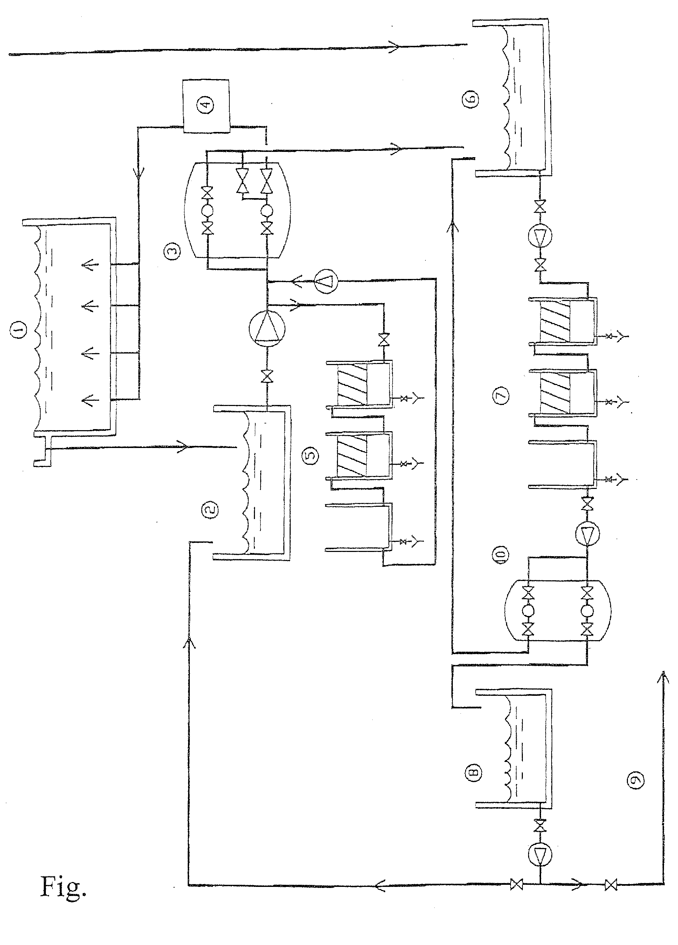

Figure 1 illustrates a pool 1, which is connected to a first purification system, which comprises a first biological purification unit and a filtration unit 3. To put it more precisely, in the flow direction of water, the pool 1 is connected to a balancing reservoir 2, which is in the flow direction further connected both directly and via the biological purification unit 5 to the filtration unit 3, which is in the flow direction further connected back to the pool 1. Part of the water coming from the pool is taken first through the biological purification unit 5 and part of it directly through the filtration unit 3. Preferably, between the filtration unit 3 and the pool 1, there is a UV unit 4 for sterilizing the filtered water with UV light. Furthermore, in this space, there may also be a chlorine dispensing unit for chlorinating the water to be passed to the pool.

The water circulation system illustrated in the figure further comprises a buffer reservoir 6, into which grey waters, i.e. mainly shower water and other wash waters, are taken. The buffer reservoir 6, which contains unpurified water, is in the flow direction further connected to a second purification system, which comprises a biological purification unit 7 and a filtration unit 10 connected one after the other in this order in the flow direction. The filtration unit 10 is in the flow direction further connected to a buffer reservoir 8 for clean water, which is further connected to the balancing reservoir 2 for carrying purified water from the second purification system to the first purification system and further to the pool. Alternatively, purified grey water can be led from the buffer reservoir 8 directly to the pool without taking it through the first purification system (not shown in the figure). If desired, the buffer reservoir 8 for clean water can also be connected to another circulating system 9 so that the water can be used for cleaning, flushing toilets, etc.

Furthermore, the pool 1 can be connected against the current to the filtration units 3 and 10 for carrying filter wash water to the filters against the current (not shown). Preferably, the water used as wash water can be connected from the balancing reservoir 2 to the filtration units 3 and 10 for taking unpurified pool water and any purified grey water to the filters against the current. Wash waters led against the current are then connected to the buffer reservoir 6 for taking the used wash water to the buffer reservoir and further through the second purification system to the filters, where the used wash water can be purified.

The filtration units 3 and 10 are normally constructed so that the water to be purified is led to the upper part of the unit, from which it flows downwards by means of gravity, for example, and is simultaneously purified. Filter of this kind is cleaned, when necessary, by pumping or spraying wash water against the current, i.e. in this case from below up.

The water circulation system described here further comprises necessary valves, meters, sensors and pumps for monitoring and controlling the purification process. In addition, it comprises dispensing units for chemicals usually used in water purification, such as chemical precipitants and chlorine. The chemicals are added by dispensing pumps, which simultaneously function with the pump that pumps water from the buffer container to the sand filter.

The biological purification units 5 and 7 described above consist of several sections. Preferably, there are approximately ten sections, although the figure illustrates only two of them. The first section of the purification unit 7 is usually a pre-aeration unit, where part of the organic load and unpleasant odours are removed. This section is not necessary in the purification unit 5. After the possible pre-aeration section, the purification units comprise in the flow direction one or more pre-clarification sections connected in parallel which function as an anaerobic reactor and separate solids. After this, in the flow direction there may be several aerobic reactors connected in parallel for removing organic load and nutrients. The aerobic reactors are provided with a carrier, to which the microbes used for purification attach, and aeration. After the aerobic reactors, there may still be a post-clarification section without lamellas for removing the solids and one or more post-clarification sections mainly for separating the biomass entering from the reactors from water. The last section is a buffer container, which functions as a pumping container. The filtration units 3 and 10 may also function as post-clarifiers.

The biological purification units contain a mixed microbial population suitable for water purification. Preferably, the mixed population contains at least the following bacteria: *Bacillus* sp. DT-1 (DSM 12560), *Pseudomonas azelaica* DT-2 (DSM 12561) and *Rhizobium* sp. DT-5 (DSM 12562). More preferably, the mixed population includes, in addition to the above-mentioned three bacteria, the following bacteria: *Pseudomonas* azelaica DT-6 (DSM 13516), *Azospirillium* sp. DT-10 (DSM 13517), *Ancylobacter* *aquaticus* DT-12 (DSM 13518) ja *Xanthobacter* sp. DT-13 (DSM 13519). These bacteria are isolated from nature and particularly suitable for purifying wastewaters of different types. They are neither pathogenic nor harmful to the environment. These bacteria are described in WO01/04060.

Since the biological purification unit of pool water can efficiently reduce both the COD and the BOD, the need for chlorinating pool water decreases. Furthermore, the biological purification unit can efficiently remove nitrogen, such as urea and ammonia, which are converted into NO₃ and finally into N₂. During the actual chlorination of water, the fast conversion of urea into NH₄ prevents the generation of chloramines, which produce odours and irritate eyes.

The filtration units 3 and 5 may be conventional filter cartridges which contain sand and/or active charcoal. They may also be membrane filters, plastic filters or ceramic filters or combinations of these. They are often multi-layered. When water is pumped through the filtration unit, it is purified both biologically and mechanically. Hair, epithelia and solids gradually clog filtration units, for which reason they have to be flushed regularly. For this purpose, circulated water to be used for washing and means for spraying the filters against the current are connected to the filtration units.

### Example

A water circulation system shown in the figure was filled with clean water. Biomass of *Bacillus* sp. DT-1 (DSM 12560), *Pseudomonas azelaica* DT-2 (DSM 12561), *Rhizobium* sp. DT-5 (DSM 12562), *Pseudomonas azelaica* DT-6 (DSM 13516), *Azospirillium* sp. DT-10 (DSM 13517), *Ancylobacter aquaticus* DT-12 (DSM 13518) and *Xanthobacter* sp. DT-13 (DSM 13519) was added to the pre-clarification sections and reactors. After this, aeration was started. On the following day, loading of the purification system was started first with a small flow (3.6 m³/day), which was gradually increased to 26 m³/day. The flow was kept constant at 26 m³/day while the chemical and microbiological properties of incoming and outgoing water were monitored. The water coming from the pool and the water going out from the filtration unit were analyzed on two successive days by conventional microbiological analyses before UV light treatment and chlorination. The results are shown below:

| | Coliforms pcs/ml 37 °C | *Ps. aeruginosa* pcs/100 ml | Thermally resistant coliforms pcs/ml 44 °C |
|---|---|---|---|
| Incoming water | *** | 86 | 143 |
| Outgoing water | 5 | 0 | 0 |
| | | | |
| Incoming water | *** | *** | 27 |
| Outgoing water | *** | 305 | 0 |

| | | | |
|---|---|---|---|
| *** = infinite | | | |

It will be obvious to a person skilled in the art that, as the technology advances, the inventive concept can be implemented in various ways. The invention and its embodiments are thus not limited to the examples described above but they may vary within the scope of the claims.

## Claims

1. A spa water circulation system, which comprises a first purification system, which is connected to a pool (1) and comprises a first biological purification unit (5) and a filtration unit (3), and a second purification system, to which grey waters of the spa are connected and which comprises a second biological purification unit (7) and a filtration unit (10), which is connected to the pool (1).

2. A water circulation system according to claim 1, wherein the second filtration unit (10) is connected to the pool (1) via the first purification system.

3. A water circulation system according to claim 1 or 2, wherein the filtration units (3) and (10) are further connectable to the pool so as to allow, when necessary, water flow from the pool to the filtration unit against the current so that the filtration unit can be cleaned, in which case the filtration units (3) and (10) are further connectable to the second biological purification unit (7) for leading filter wash waters there.

4. A water circulation system according to claim 1, which further comprises a balancing reservoir (2), which is connected between the pool and the first purification system, a buffer reservoir (6), which is connected between the first and the second purification system, and a buffer reservoir (8) for clean water, which is connected between the second purification system and the balancing reservoir (2).

5. A water circulation system according to claim 4, **characterized in that** the balancing reservoir (2) is further connectable to the filtration units (3) and (10) against the current.

6. A water circulation system according to any one of claims 1 to 5, **characterized in that** the biological purification units (5 and 7) include the bacteria *Bacillus* sp. DT-1 (DSM 12560), *Pseudomonas azelaica* DT-2 (DSM 12561), *Rhizobium* sp. DT-5 (DSM 12562), *Pseudomonas azelaica* DT-6 (DSM 13516), *Azospirillium* sp. DT-10 (DSM 13517), *Ancylobacter aquaticus* DT-12 (DSM 13518) and *Xanthobacter* sp. DT-13 (DSM 13519).

7. A method of circulating spa water, wherein pool (1) water is circulated through a first purification system, which comprises a first biological purification unit (5) and a filtration unit (3), and grey water is passed through a second purification system, which comprises a second biological purification unit (7) and a filtration unit (10), from which purified water is led to the pool.

8. A method according to claim 7, wherein purified water is led from the filtration unit (10) to the pool (1) via the first purification system.

9. A method according to claim 7 or 8, wherein, when necessary, water is taken from the pool (1) to the filtration units (3 and 10) against the current for use as wash water, and the used wash water is then led to the second biological purification unit (7).

10. A method according to claim 7, **characterized in that** the pool (1) water is first taken to a balancing reservoir (2), from which it is led either directly or via the biological purification unit (5) through the filtration unit (3) of the first purification system and then back to the pool via a UV unit (4).

11. A method according to claim 9, **characterized in that** grey water and filter wash waters are taken to a buffer reservoir (6), from which the waters are taken to the biological purification unit (7) of the second purification system.

12. A method according to claim 7, **characterized in that** the water that has passed through the second purification system is led to a clean water buffer reservoir (8), from which it is led to the balancing reservoir (2) and from there to the first purification system.

13. A method according to claim 12, **characterized in that** part of the water of the buffer reservoir (8) is passed to another circulation system (9).

14. A method according to any one of claims 7 to 13, **characterized in that** the biological purification is performed by a mixed bacterial population, which includes the bacteria *Bacillus* sp. DT-1 (DSM 12560), *Pseudomonas azelaica* DT-2 (DSM 12561), *Rhizobium* sp. DT-5 (DSM 12562), *Pseudomonas azelaica* DT-6 (DSM 13516), *Azospirillium* sp. DT-10 (DSM 13517), *Ancylobacter* aquaticus DT-12 (DSM 13518) and *Xanthobacter* sp. DT-13 (DSM 13519).
